# FASCICULE DE BREVET EUROPEEN

(11) **EP 2 522 267 B1**
(45) Date de publication et mention de la délivrance du brevet: **12.08.2015**
(21) Numéro de dépôt: 12166721.6
(22) Date de dépôt: 04.05.2012
(51) Int. Cl.: A47L 15/00

(54) **Procédé de nettoyage de pièces de vaisselle dans une machine à laver la vaisselle**
Verfahren zur Reinigung von Geschirr in einer Geschirrspülmaschine
Method for cleaning crockery in a dishwashing machine

(30) Priorité: 09.05.2011 FR 1101419
(43) Date de publication de la demande: 14.11.2012
(73) Titulaire: Groupe Brandt, 92500 Rueil-Malmaison (FR)
(72) Inventeur: Lavignac, M. Hervé, 85000 La roche sur Yon (FR); Remeur, M. Daniel, 85170 DOMPIERRE SUR YON (FR)

(56) Documents cités:
- EP-A2- 1 362 545
- WO-A2-2004/054426
- DE-A1- 19 540 871
- DE-A1-102004 054 313
- US-A1- 2008 236 630

## Description

La présente invention concerne d'une part un procédé de nettoyage de pièces de vaisselle dans une machine à laver la vaisselle de manière à minimiser les consommations en eau et en énergie tout en garantissant les performances de lavage et de séchage des pièces de vaisselle.

Elle concerne également une machine à laver la vaisselle adaptée à mettre en oeuvre le procédé.

De manière générale, l'invention concerne les machines à laver la vaisselle, particulièrement les machines à usage domestique.

On connaît déjà des machines à laver la vaisselle comprenant une cuve de lavage, où la cuve de lavage comprend une gamelle ménagée au niveau de la paroi inférieure de la cuve de lavage du lave-vaisselle. La gamelle peut contenir de l'eau d'un bain de lavage et/ou de rinçage.

Ces machines à laver la vaisselle comprennent généralement deux paniers à vaisselle pouvant contenir des pièces de vaisselle, un moyen de chauffage pour chauffer l'eau d'un bain de lavage et/ou de rinçage, plusieurs moyens d'aspersion de l'eau d'un bain de lavage et/ou de rinçage dans ladite cuve de lavage, où un des moyens d'aspersion peut être disposé en dessous d'un des paniers à vaisselle, et une pompe de mise en circulation de l'eau d'un bain de lavage et/ou de rinçage depuis la gamelle vers les moyens d'aspersion.

Ces machines à laver la vaisselle sont pourvues de programmes de nettoyage comportant une étape de lavage, où l'eau d'un bain de lavage est remplie, chauffée, puis mise en circulation au moyen de la pompe de mise en circulation depuis la gamelle vers les moyens d'aspersion puis retournée dans la gamelle ; une étape de vidange de l'eau du bain de lavage ; une première étape de rinçage, où l'eau d'un premier bain de rinçage est remplie, puis mise en circulation au moyen de la pompe de mise en circulation sans chauffage de l'eau du premier bain de rinçage ; une étape de vidange de l'eau du premier bain de rinçage ; une deuxième étape de rinçage, où l'eau d'un deuxième bain de rinçage est remplie, puis mise en circulation au moyen de la pompe de mise en circulation avec chauffage de l'eau du deuxième bain de rinçage.

Cependant, ces machines à laver la vaisselle présentent l'inconvénient de mettre en oeuvre une première étape de rinçage, communément appelé rinçage froid, avec un bain de rinçage complet sans chauffage de ce dernier de sorte à arroser les pièces de vaisselle, la cuve de lavage et des éléments hydrauliques du circuit hydraulique de la machine à laver la vaisselle par la mise en fonctionnement de la pompe de mise en circulation, puis de vidanger ce bain de rinçage froid.

Par conséquent, l'arrosage avec de l'eau d'un premier bain de rinçage non chauffé et provenant du réseau d'eau suite à l'étape de lavage avec de l'eau d'un bain de lavage chauffé des pièces de vaisselle, de la cuve de lavage et des éléments hydrauliques du circuit hydraulique de la machine à laver la vaisselle provoque le refroidissement de ceux-ci.

Ce refroidissement des pièces de vaisselle, de la cuve de lavage et des éléments hydrauliques du circuit hydraulique de la machine à laver la vaisselle est provoqué par la mise en contact de l'eau d'un premier bain de rinçage non chauffé et provenant du réseau d'eau.

En outre, cet arrosage avec de l'eau d'un premier bain de rinçage non chauffé et provenant du réseau des pièces de vaisselle, de la cuve de lavage et des éléments hydrauliques du circuit hydraulique de la machine à laver la vaisselle nécessite d'apporter une quantité de chaleur importante lors de la deuxième étape de rinçage, communément appelé rinçage chaud, pour chauffer ces derniers pour garantir les performances de séchage des pièces de vaisselle.

Par ailleurs, la quantité d'eau nécessaire pour le premier bain de rinçage correspondant à un bain complet est importante, pouvant être de l'ordre de 4,5 litres d'eau, pour permettre l'arrosage des pièces de vaisselle par la pompe de mise en circulation nécessitant un niveau d'eau minimum dans la gamelle.

Et la première étape de rinçage est mise en oeuvre pendant une durée longue, pouvant être de l'ordre de 10 minutes, de sorte à arroser les pièces de vaisselle par la pompe de mise en circulation et les différents moyens d'aspersion.

On connaît également le document EP 1 362 545 A2 qui décrit un procédé pour faire fonctionner un lave-vaisselle, où le procédé comprend plusieurs phases de programme faisant circuler l'eau, le pré-rinçage, le lavage, le rinçage intermédiaire, le rinçage à l'eau claire qui fonctionnent avec d'une part de l'eau chaude et d'autre part avec de l'eau froide. Au moins dans une phase du programme avec de l'eau froide qui suit une phase de programme avec de l'eau chaude, la circulation de l'eau est interrompue plusieurs fois par la mise en circuit et la mise hors circuit répétées d'une pompe de circulation et par cela un rinçage des pièces de vaisselle par impulsions est réalisé.

La présente invention a pour but de résoudre les inconvénients précités et de proposer un procédé de nettoyage de pièces de vaisselle dans une machine à laver la vaisselle, et une machine à laver la vaisselle associée à ce procédé, permettant d'optimiser la première étape de rinçage de sorte à minimiser les consommations en énergie et en eau tout en garantissant les performances de lavage et de séchage des pièces de vaisselle.

A cet effet, la présente invention vise, un procédé de nettoyage de pièces de vaisselle dans une machine à laver la vaisselle, ladite machine à laver la vaisselle comprenant :
- une cuve de lavage, où ladite cuve de lavage comprend une gamelle ménagée au niveau de la paroi inférieure de ladite cuve de lavage, ladite gamelle pouvant contenir de l'eau d'un bain de lavage et/ou de rinçage,
- au moins un panier à vaisselle pouvant contenir des pièces de vaisselle,
- au moins un moyen de chauffage pour chauffer l'eau d'un bain de lavage et/ou de rinçage,
- au moins un moyen d'aspersion de l'eau d'un bain de lavage et/ou de rinçage dans ladite cuve de lavage, où un premier moyen d'aspersion est disposé en dessous dudit au moins un panier à vaisselle,
- au moins une pompe de mise en circulation de l'eau d'un bain de lavage et/ou de rinçage depuis ladite gamelle vers ledit au moins un moyen d'aspersion.

Le procédé comprend au moins les étapes suivantes :
- une étape de lavage, où l'eau d'un bain de lavage est remplie, chauffée, puis mise en circulation au moyen de ladite au moins une pompe de mise en circulation depuis ladite gamelle vers ledit au moins un moyen d'aspersion puis retournée dans ladite gamelle ;
- une étape de vidange de l'eau du bain de lavage ;
- une première étape de rinçage, où l'eau d'un premier bain de rinçage est remplie, puis mise en circulation au moyen de ladite au moins une pompe de mise en circulation, sans chauffage de l'eau dudit premier bain de rinçage ;
- une étape de vidange de l'eau dudit premier bain de rinçage ; et
- une deuxième étape de rinçage, où l'eau d'un deuxième bain de rinçage est remplie, puis mise en circulation au moyen de ladite au moins une pompe de mise en circulation, avec chauffage de l'eau dudit deuxième bain de rinçage.

Selon l'invention, au cours de ladite première étape de rinçage, la mise en fonctionnement de ladite au moins une pompe de mise en circulation met en circulation de l'eau dudit premier bain de rinçage depuis ladite gamelle vers ledit premier moyen d'aspersion sans arroser les pièces de vaisselle disposées dans ladite cuve de lavage.

Ainsi, l'eau du premier bain de rinçage étant non chauffée est uniquement mise en contact avec les éléments hydrauliques de la machine à laver la vaisselle disposées en partie inférieure de la cuve de lavage et sous ledit au moins un panier à vaisselle.

De cette manière, les pièces de vaisselle disposées à l'intérieur de la cuve de lavage et la partie de la cuve de lavage située au-dessus du premier moyen d'aspersion ne sont pas refroidies par la mise en contact avec l'eau du premier bain de rinçage étant non chauffée.

En outre, au début de la deuxième étape de rinçage, les pièces de vaisselle disposées à l'intérieur de la cuve de lavage et la partie de la cuve de lavage située au-dessus du premier moyen d'aspersion bénéficient de l'apport de chaleur de l'eau du bain de lavage étant chauffé.

De cette manière, la phase de chauffage du deuxième bain de rinçage est raccourcie pour une température finale de deuxième bain de rinçage identique par rapport à un programme de nettoyage où les pièces de vaisselle sont arrosées lors de la première étape de rinçage de sorte à minimiser la consommation d'énergie.

D'autres particularités et avantages apparaîtront encore dans la description ci-après.

Aux dessins annexés, donnés à titre d'exemples non limitatifs :
- la figure 1 est une vue schématique en perspective illustrant une machine à laver la vaisselle conforme à l'invention, où la porte obturant l'ouverture d'accès de la cuve de lavage est en position ouverte, et où le panier à vaisselle inférieur est en vue écorchée ; et
- la figure 2 est une vue schématique en coupe partielle illustrant une machine à laver la vaisselle conforme à l'invention.

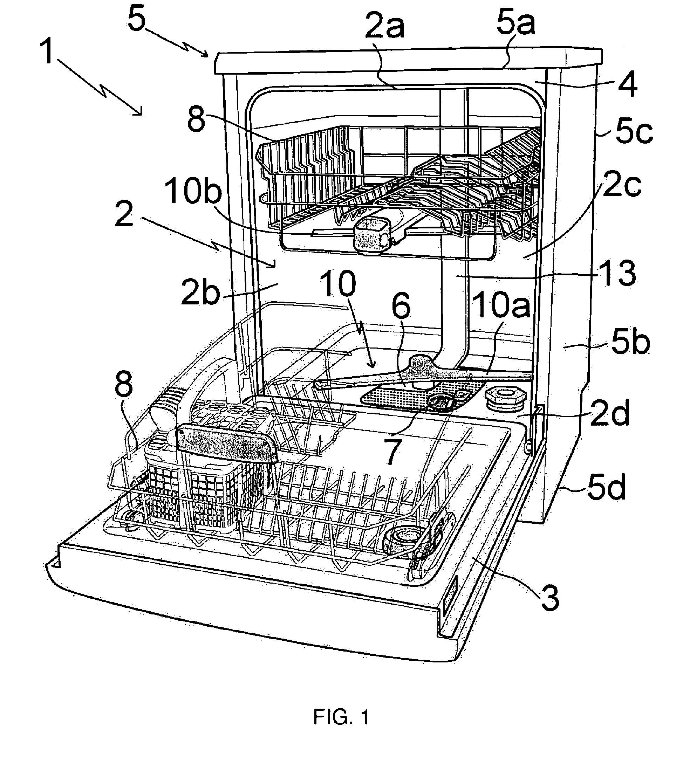

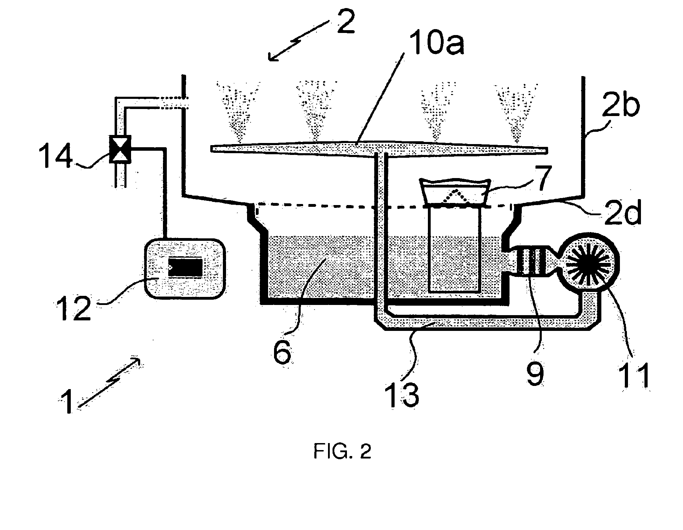

On va décrire tout d'abord, en référence aux figures 1 et 2, une machine à laver la vaisselle adaptée à mettre en oeuvre le procédé de nettoyage de pièces de vaisselle conforme à l'invention.

Bien entendu, la présente invention s'applique à tous les types de machine à laver la vaisselle, et notamment destinée à être encastrée dans un meuble ou à être en pose libre.

Une machine à laver la vaisselle 1 comprend une cuve de lavage 2.

La machine à laver la vaisselle 1 comprend un circuit hydraulique 13. Le circuit hydraulique 13 peut comprendre un dispositif de raccordement au réseau de distribution d'eau et au moins une électrovanne 14 commandée par une unité de commande 12 de la machine à laver la vaisselle 1 de sorte à alimenter en eau la cuve de lavage 2.

La cuve de lavage 2 a une ouverture d'accès obturée par une porte 3 en face frontale 4. La porte 3 de la cuve de lavage 2 peut ainsi être mobile entre une position fermée dans laquelle elle obture l'ouverture d'accès, de manière étanche, et une position ouverte.

Dans un mode de réalisation, la cuve de lavage 2 peut être entourée par un boîtier 5 comprenant une paroi supérieure 5a, des parois latérales 5b, une paroi de fond 5c et une paroi inférieure 5d. Ce boîtier 5 de la machine à laver la vaisselle 1 est adapté à loger la cuve de lavage 2.

La cuve de lavage 2 comprend une paroi supérieure 2a, des parois latérales 2b, une paroi de fond 2c et une paroi inférieure 2d. La cuve de lavage 2 est adaptée notamment à contenir l'eau du bain de lavage et/ou de rinçage des étapes d'un programme de nettoyage de pièces de vaisselle.

La cuve de lavage 2 comprend une gamelle 6 ménagée au niveau de la paroi inférieure 2a de la cuve de lavage 2. La gamelle 6 peut contenir de l'eau d'un bain de lavage et/ou de rinçage.

Une eau d'un bain de lavage et/ou de rinçage est définie comme de l'eau permettant le nettoyage de la vaisselle respectivement au cours d'une étape de lavage ou d'une étape de rinçage et circulant dans un circuit hydraulique 13 d'une machine à laver la vaisselle 1. L'origine de l'eau d'un bain de lavage et/ou de rinçage est une eau arrivant du réseau d'alimentation en eau de la machine à laver la vaisselle 1.

Préférentiellement, la machine à laver la vaisselle 1 comprend un dispositif de filtration 7 disposé à l'intérieur de la gamelle 6 de la cuve de lavage 2.

La machine à laver la vaisselle 1 comprend au moins un panier à vaisselle 8 pouvant contenir des pièces de vaisselle et disposé à l'intérieur de la cuve de lavage 2.

Dans un mode de réalisation, tel qu'illustré à la figure 1, la machine à laver la vaisselle 1 comprend deux paniers à vaisselle 8 disposés l'un au-dessus de l'autre à l'intérieur de la cuve de lavage 2, et appelés respectivement panier à vaisselle supérieur pour le panier à vaisselle 8 situé en partie supérieure de la cuve de lavage 2 et panier à vaisselle inférieur pour le panier à vaisselle 8 situé en partie inférieure de la cuve de lavage 2.

Les paniers à vaisselle 8 peuvent être poussés et retirés en les faisant coulisser à l'intérieur de la cuve de lavage 2 de la machine à laver la vaisselle 1 soit après la fin d'un programme de nettoyage pour le déchargement de la vaisselle soit avant le début d'un programme de nettoyage pour le chargement de la vaisselle.

La machine à laver la vaisselle 1 comprend au moins un moyen de chauffage 9 pour chauffer l'eau d'un bain de lavage et/ou de rinçage.

Ici et de manière nullement limitative, ledit au moins un moyen de chauffage 9 est un tunnel chauffant comprenant un tube de circulation d'eau entouré par un élément chauffant.

La machine à laver la vaisselle 1 comprend au moins un moyen d'aspersion 10 de l'eau d'un bain de lavage et/ou de rinçage dans la cuve de lavage 2. Et un premier moyen d'aspersion 10a est disposé en dessous dudit au moins un panier à vaisselle 8.

Dans un mode de réalisation, tel qu'illustré à la figure 1, où deux paniers à vaisselle 8 sont disposés à l'intérieur de la cuve de lavage 2, le premier moyen d'aspersion 10a est disposé en dessous du panier à vaisselle inférieur 8.

D'autres moyens d'aspersion 10 peuvent être disposés dans la cuve de lavage 2, tel que par un exemple un moyen d'aspersion 10b disposé en dessous du panier à vaisselle supérieur 8b et un moyen d'aspersion (non représenté) disposé au-dessus du panier à vaisselle supérieur 8.

Bien entendu, la position et le nombre des autres moyens d'aspersion ne sont nullement limitatifs et peuvent être différents, en particulier un moyen d'aspersion peut être disposé le long de la paroi de fond de la cuve de lavage.

Ces autres moyens d'aspersion 10b peuvent être par exemple un bras d'aspersion rotatif, ou une buse d'aspersion fixe ou rotative.

La machine à laver la vaisselle 1 comprend au moins une pompe de mise en circulation 11 de l'eau d'un bain de lavage et/ou de rinçage depuis la gamelle 6 vers ledit au moins un moyen d'aspersion 10.

Dans un mode de réalisation, tel qu'illustré aux figures 1 et 2, la machine à laver la vaisselle 1 comprend une seule pompe de mise en circulation 11 de l'eau d'un bain de lavage et/ou de rinçage. Cette pompe de mise en circulation 11 peut alimenter en eau un ou plusieurs moyens d'aspersion 10 par des canalisations. La répartition de l'eau d'un bain de lavage et/ou de rinçage évacuée par la pompe de mise en circulation 11 peut être mise en oeuvre au moyen d'un distributeur d'eau (non représenté) permettant l'alimentation en eau d'un ou plusieurs moyens d'aspersion 10.

La circulation de l'eau d'un bain de lavage et/ou de rinçage dans le circuit hydraulique 13 de la machine à laver la vaisselle 1 est mise en oeuvre au moyen de la pompe de mise en circulation 11 et du distributeur d'eau positionné à la sortie de la pompe de mise en circulation 11 et en amont du circuit d'alimentation en eau dudit au moins un moyen d'aspersion 10.

Le distributeur d'eau peut permettre de bloquer le passage d'eau dans une canalisation reliée à un moyen d'aspersion 10 lorsque ce moyen d'aspersion 10 ne doit pas être alimenté en eau au cours d'une étape de lavage ou d'une étape de rinçage.

Dans ce mode de réalisation, la machine à laver la vaisselle 1 fonctionne de telle sorte à minimiser le volume d'eau du bain de lavage et/ou de rinçage retenu dans la gamelle 6 ménagée dans la paroi inférieure 2d de la cuve de lavage 2.

La pompe de mise en circulation 11 aspire l'eau du bain de lavage et/ou de rinçage dans la gamelle 6 pour faire circuler l'eau du bain de lavage et/ou de rinçage sous pression jusqu'à un ou plusieurs moyens d'aspersion 10. Ensuite, l'eau du bain de lavage et/ou de rinçage retourne par gravité vers la gamelle 6 de la cuve de lavage 2.

La pompe de mise en circulation 11 est entraînée par un moteur électrique.

Bien entendu et de manière nullement limitative, la machine à laver la vaisselle peut comprendre une ou plusieurs pompes de mise en circulation.

La machine à laver la vaisselle 1 peut également comprendre une pompe de vidange (non représentée) pour vidanger l'eau d'un bain de lavage et/ou de rinçage depuis la cuve de lavage 2 vers un réseau d'eau usée.

La machine à laver la vaisselle 1 comprend, en outre, une unité de commande 12 permettant de mettre en oeuvre des programmes de nettoyage prédéterminés. L'unité de commande 12 peut comporter un microcontrôleur commandant notamment le fonctionnement de ladite au moins une pompe de mise en circulation 11, du distributeur d'eau, de la pompe de vidange et dudit au moins un moyen de chauffage 9.

On va décrire à présent le procédé de nettoyage de pièces de vaisselle conforme à l'invention.

Le procédé de nettoyage de pièces de vaisselle comprend au moins les étapes suivantes :
- une étape de lavage, où l'eau d'un bain de lavage est remplie, chauffée, puis mise en circulation au moyen de ladite au moins une pompe de mise en circulation 11 depuis la gamelle 6 vers ledit au moins un moyen d'aspersion 10 puis retournée dans la gamelle 6 ;
- une étape de vidange de l'eau du bain de lavage ;
- une première étape de rinçage, où l'eau d'un premier bain de rinçage est remplie, puis mise en circulation au moyen de ladite au moins une pompe de mise en circulation 11, sans chauffage de l'eau du premier bain de rinçage ;
- une étape de vidange de l'eau du premier bain de rinçage ; et
- une deuxième étape de rinçage, où l'eau d'un deuxième bain de rinçage est remplie, puis mise en circulation au moyen de ladite au moins une pompe de mise en circulation 11, avec chauffage de l'eau du deuxième bain de rinçage.

Au cours de l'étape de lavage, l'eau du bain de lavage est remplie depuis un réseau d'eau connecté à la machine à laver la vaisselle 1, chauffée par ledit au moins un moyen de chauffage 9 à une température prédéterminée et mise en circulation par ladite au moins une pompe de mise en circulation 11 de sorte à arroser les pièces de vaisselle. La température de l'eau du bain de lavage au cours de l'étape de lavage est contrôlée par l'unité de commande 12 de la machine à laver la vaisselle 1 en fonction du programme de nettoyage sélectionné.

L'étape de lavage peut être mise en oeuvre avec ou sans produit de lavage mélangé avec l'eau du bain de lavage.

Suite à l'étape de lavage, une étape de vidange de l'eau du bain de lavage est mise en oeuvre de sorte à évacuer de l'eau, le produit de lavage et les salissures décrochées des pièces de vaisselle.

Dans un mode de réalisation préféré, la vidange de l'eau du bain de lavage est complète. Une vidange complète du bain de lavage permet d'évacuer l'eau chargée de salissures de sorte à optimiser les performances de lavage de la machine à laver la vaisselle 1.

Dans un autre mode de réalisation, la vidange de l'eau du bain de lavage peut être partielle. Cette vidange partielle peut permettre de réutiliser une partie de l'eau du bain de lavage avec une nouvelle quantité d'eau alimentée depuis un réseau d'eau. La partie restante de l'eau du bain de lavage et la quantité d'eau alimentée depuis un réseau d'eau sont mélangées de sorte à constituer l'eau du premier bain de rinçage.

Au cours de la première étape de rinçage, l'eau du premier bain de rinçage est, de préférence, remplie depuis le réseau d'eau et mise en circulation par ladite au moins une pompe de mise en circulation 11 sans être chauffée par ledit au moins un moyen de chauffage 9.

La phase de remplissage en eau du réseau de la gamelle 6 de la cuve de lavage 2 lors de la première étape de rinçage est interrompue suite à l'atteinte d'un niveau d'eau prédéterminé.

La première étape de rinçage est préférentiellement mise en oeuvre sans produit de rinçage mélangé avec l'eau du premier bain de rinçage.

Suite à la première étape de rinçage, une étape de vidange de l'eau du premier bain de rinçage est mise en oeuvre de sorte à évacuer de l'eau, du produit de lavage restant et des salissures restantes décrochées des pièces de vaisselle.

La vidange de l'eau du premier bain de rinçage peut être une vidange partielle ou complète du premier bain de rinçage en fonction du niveau de performances de lavage et du niveau de consommation d'eau à atteindre.

Dans le cas où la vidange de l'eau du bain de lavage est partielle, celle-ci peut permettre de réutiliser une partie de l'eau du premier bain de rinçage avec une nouvelle quantité d'eau alimentée depuis un réseau d'eau. La partie restante de l'eau du premier bain de rinçage et la quantité d'eau alimentée depuis un réseau d'eau sont mélangées de sorte à constituer l'eau du deuxième bain de rinçage.

Au cours de la deuxième étape de rinçage, l'eau du deuxième bain de rinçage est remplie depuis le réseau d'eau, chauffée par ledit au moins un moyen de chauffage 9 à une température prédéterminée et mise en circulation par ladite au moins une pompe de mise en circulation 11 de sorte à arroser les pièces de vaisselle. La température de l'eau du deuxième bain de rinçage au cours de la deuxième étape de rinçage est contrôlée par l'unité de commande 12 de la machine à laver la vaisselle 1 en fonction du programme de nettoyage sélectionné.

La deuxième étape de rinçage peut être mise en oeuvre avec ou sans produit de rinçage mélangé avec l'eau du deuxième bain de rinçage.

La deuxième étape de rinçage peut être suivie d'une étape de vidange de l'eau du deuxième bain de rinçage.

Les étapes de vidange de l'eau du bain de lavage et des bains de rinçage sont mises en oeuvre par la mise en fonctionnement de la pompe de vidange évacuant l'eau vers un réseau d'eau usée.

Au cours de la première étape de rinçage, la mise en fonctionnement de ladite au moins une pompe de mise en circulation 11 met en circulation de l'eau du premier bain de rinçage depuis la gamelle 6 vers le premier moyen d'aspersion 10a sans arroser les pièces de vaisselle disposées dans la cuve de lavage 2.

Ainsi, l'eau du premier bain de rinçage étant non chauffée est uniquement mise en contact avec les éléments hydrauliques de la machine à laver la vaisselle 1 disposées en partie inférieure de la cuve de lavage 2 et sous ledit au moins un panier à vaisselle 8, correspondant notamment à la gamelle 6, à ladite au moins une pompe de mise en circulation 11, au premier moyen d'aspersion 10a et au dispositif de filtration 7.

De cette manière, les pièces de vaisselle disposées à l'intérieur de la cuve de lavage 2 et la partie de la cuve de lavage 2 située au-dessus du premier moyen d'aspersion 10a ne sont pas refroidies par la mise en contact avec l'eau du premier bain de rinçage étant non chauffée.

Par conséquent, l'eau du premier bain de rinçage étant non chauffée n'est pas mise en contact avec les pièces de vaisselle et la partie supérieure de la cuve de lavage 2 de sorte à éviter de refroidir celles-ci.

En outre, au début de la deuxième étape de rinçage, les pièces de vaisselle disposées à l'intérieur de la cuve de lavage 2 et la partie de la cuve de lavage 2 située au-dessus du premier moyen d'aspersion 10a bénéficient de l'apport de chaleur de l'eau du bain de lavage étant chauffé.

De cette manière, la phase de chauffage du deuxième bain de rinçage est raccourcie pour une température finale de deuxième bain de rinçage identique par rapport à un programme de nettoyage où les pièces de vaisselle sont arrosées lors de la première étape de rinçage de sorte à minimiser la consommation d'énergie.

Par ailleurs, l'eau du premier bain de rinçage mise en circulation par ladite au moins une pompe de mise en circulation 11 permet de garantir le nettoyage de la gamelle 6 de la cuve de lavage 2 ainsi que de la partie du circuit hydraulique 13 de la machine à laver la vaisselle 1 située en dessous du premier moyen d'aspersion 10a.

La première étape de rinçage permet d'évacuer de l'eau du premier bain de rinçage, des résidus de produit de lavage et de salissures de sorte à atteindre des performances de lavage demandées à la machine à laver la vaisselle 1.

Préférentiellement, la pression d'eau générée lors de la mise en fonctionnement de ladite au moins une pompe de mise en circulation 11, au cours de la première étape de rinçage, est inférieure à la pression d'eau d'arrosage des pièces de vaisselle par le premier moyen d'aspersion 10a.

Ainsi, la pression d'eau générée par ladite au moins une pompe de mise en circulation 11 contrôlée par l'unité de commande 12 de la machine à laver la vaisselle 1 n'est pas suffisante pour permettre l'arrosage des pièces de vaisselle par le premier moyen d'aspersion 10a disposé sous ledit au moins un panier à vaisselle 8, et en particulier sous le panier à vaisselle inférieur 8 tel qu'illustré aux figures 1 et 2.

En outre, la pression d'eau générée par ladite au moins une pompe de mise en circulation 11 contrôlée par l'unité de commande 12 de la machine à laver la vaisselle 1 n'est pas suffisante pour permettre l'arrosage des pièces de vaisselle par d'autres moyens d'aspersion 10b puisque ceux-ci ne peuvent pas être alimentés en eau de part leur positionnement au-dessus du premier moyen d'aspersion 10a.

De cette manière, l'eau du premier bain de rinçage étant non chauffée n'est pas mise en contact avec les pièces de vaisselle et la partie supérieure de la cuve de lavage 2 de sorte à éviter de refroidir celles-ci.

Par ailleurs, l'eau du premier bain de rinçage mise en circulation par ladite au moins une pompe de mise en circulation 11 permet de garantir le nettoyage de la gamelle 6 de la cuve de lavage 2 ainsi que de la partie du circuit hydraulique 13 de la machine à laver la vaisselle 1 située en dessous du premier moyen d'aspersion 10a.

Dans un mode de réalisation préféré, le premier moyen d'aspersion 10a est un bras d'aspersion rotatif, et la pression d'eau générée lors de la mise en fonctionnement de ladite au moins une pompe de mise en circulation 11, au cours de la première étape de rinçage, est inférieure à la pression d'eau d'entraînement en rotation du bras d'aspersion rotatif.

Ainsi, la pression d'eau générée par ladite au moins une pompe de mise en circulation 11 contrôlée par l'unité de commande 12 de la machine à laver la vaisselle 1 n'est ainsi pas suffisante pour entraîner en rotation le bras d'aspersion rotatif 10a de sorte à empêcher l'arrosage des pièces de vaisselle.

Avantageusement, la pression d'eau générée lors de la mise en fonctionnement de ladite au moins une pompe de mise en circulation 11, au cours de la première étape de rinçage, s'étend dans une plage de 5 à 10 mbar.

Préférentiellement, la quantité d'eau contenue dans la gamelle 6, au cours de la première étape de rinçage, est une quantité d'eau prédéterminée permettant uniquement de pouvoir amorcer ladite au moins une pompe de mise en circulation 11.

Ainsi, ladite au moins une pompe de mise en circulation 11 commandée par l'unité de commande 12 de la machine à laver la vaisselle 1 peut être amorcée avec la quantité d'eau du premier bain de rinçage contenue dans la gamelle 6 tout en étant insuffisante pour permettre l'arrosage des pièces de vaisselle par le premier moyen d'aspersion 10a disposé sous ledit au moins un panier à vaisselle 8, et en particulier sous le panier à vaisselle inférieur 8 tel qu'illustré à la figure 1.

En outre, la quantité d'eau évacuée par ladite au moins une pompe de mise en circulation 11 n'est pas suffisante pour alimenter d'autres moyens d'aspersion 10b puisque ceux-ci sont positionnés au-dessus du premier moyen d'aspersion 10a.

De cette manière, l'eau du premier bain de rinçage étant non chauffée n'est pas mise en contact avec les pièces de vaisselle et la partie supérieure de la cuve de lavage 2 de sorte à éviter de refroidir celles-ci. Et l'eau du premier bain de rinçage mise en circulation par ladite au moins une pompe de mise en circulation 11 permet de garantir le nettoyage de la gamelle 6 de la cuve de lavage 2 ainsi que de la partie du circuit hydraulique 13 de la machine à laver la vaisselle 1 située en dessous du premier moyen d'aspersion 10a.

Par ailleurs, la faible quantité d'eau du premier bain de rinçage remplie dans la gamelle 6 de la cuve de lavage 2 permettant uniquement de pouvoir amorcer ladite au moins une pompe de mise en circulation 11 au cours de la première étape de rinçage permet de minimiser la consommation d'eau d'un programme de nettoyage mis en oeuvre par la machine à laver la vaisselle 1.

Un tel fonctionnement de ladite au moins une pompe de mise en circulation 11 permet également de réduire la durée de la première étape de rinçage.

Avantageusement, la quantité d'eau prédéterminée contenue dans la gamelle 6, au cours de la première étape de rinçage, est de l'ordre de 1 litre.

Dans un mode de réalisation, cette quantité d'eau prédéterminée du premier bain de rinçage contenue dans la gamelle 6, au cours de la première étape de rinçage, correspond au niveau d'eau prédéterminé dans la gamelle 6 lors de la phase de remplissage en eau du réseau, tel que décrit précédemment.

Préférentiellement, au cours de la première étape de rinçage, ladite au moins une pompe de mise en circulation 11 est mise en fonctionnement par au moins une impulsion électrique d'une durée prédéterminée.

Ainsi, ladite au moins une pompe de mise en circulation 11 commandée par l'unité de commande 12 de la machine à laver la vaisselle 1 est mise en fonctionnement pendant une courte période de temps tout en étant insuffisante pour permettre l'arrosage avec l'eau du premier bain de rinçage des pièces de vaisselle par le premier moyen d'aspersion 10a disposé sous ledit au moins un panier à vaisselle 8, et en particulier sous le panier à vaisselle inférieur 8 tel qu'illustré à la figure 1.

En outre, la quantité d'eau évacuée par ladite au moins une pompe de mise en circulation 11 n'est pas suffisante pour alimenter d'autres moyens d'aspersion 10b puisque ceux-ci sont positionnés au-dessus du premier moyen d'aspersion 10a.

De cette manière, l'eau du premier bain de rinçage étant non chauffée n'est pas mise en contact avec les pièces de vaisselle et la partie supérieure de la cuve de lavage 2 de sorte à éviter de refroidir celles-ci. Et l'eau du premier bain de rinçage mise en circulation par ladite au moins une pompe de mise en circulation 11 permet de garantir le nettoyage de la gamelle 6 de la cuve de lavage 2 ainsi que de la partie du circuit hydraulique 13 de la machine à laver la vaisselle 1 située en dessous du premier moyen d'aspersion 10a.

Par ailleurs, l'impulsion électrique permettant d'alimenter en énergie électrique ladite au moins une pompe de mise en circulation 11 pendant une courte période de temps au cours de la première étape de rinçage permet de minimiser la consommation d'énergie d'un programme de nettoyage mis en oeuvre par la machine à laver la vaisselle 1.

L'impulsion électrique permettant d'alimenter en énergie électrique ladite au moins une pompe de mise en circulation 11 pendant une courte période de temps au cours de la première étape de rinçage permet également que le régime hydraulique dans le circuit hydraulique 13 de la machine à laver la vaisselle 1 ne soit pas stable.

Le régime hydraulique instable dans le circuit hydraulique 13 de la machine à laver la vaisselle 1 peut être atteint en n'utilisant que la quantité d'eau prédéterminée permettant uniquement de pouvoir amorcer ladite au moins une pompe de mise en circulation 11.

De cette manière, la consommation d'eau d'un programme de nettoyage mis en oeuvre par la machine à laver la vaisselle 1 est minimisée.

L'utilisation de la quantité d'eau prédéterminée au cours de la première étape de rinçage permet de créer un manque d'eau au niveau de ladite au moins une pompe de mise en circulation 11 de sorte à ne pas projeter d'eau du premier bain de rinçage sur les pièces de vaisselle par ledit au moins un moyen d'aspersion 10.

Un tel fonctionnement de ladite au moins une pompe de mise en circulation 11 permet également de réduire la durée de la première étape de rinçage.

Avantageusement, la durée prédéterminée de l'impulsion électrique de mise en fonctionnement de ladite au moins une pompe de mise en circulation 11 est inférieure à 10 secondes, et préférentiellement de l'ordre de 5 secondes.

Dans un mode de réalisation préféré, la première étape de rinçage comprend une unique impulsion électrique de ladite au moins une pompe de mise en circulation 11 d'une durée prédéterminée.

Dans un mode de réalisation, la mise en fonctionnement de ladite au moins une pompe de mise en circulation 11, au cours de ladite première étape de rinçage, avec une quantité d'eau prédéterminée permettant uniquement de pouvoir amorcer ladite au moins une pompe de mise en circulation 11 par au moins une impulsion électrique d'une durée prédéterminée en générant une pression d'eau inférieure à la pression d'eau d'arrosage des pièces de vaisselle par ledit premier moyen d'aspersion 10a permet de minimiser les consommations d'eau et d'énergie d'un programme de nettoyage mis en oeuvre par la machine à laver la vaisselle 1 et d'éviter de projeter de l'eau sur les pièces de vaisselle.

De cette manière, les pièces de vaisselle disposées à l'intérieur de la cuve de lavage 2 et la partie de la cuve de lavage 2 située au-dessus du premier moyen d'aspersion 10a ne sont pas refroidies par la mise en contact avec l'eau du premier bain de rinçage étant non chauffée.

Grâce à la présente invention, les consommations d'eau et d'énergie du procédé de nettoyage de pièces de vaisselle sont minimisées.

Bien entendu, de nombreuses modifications peuvent être apportées aux modes de réalisation décrits précédemment sans sortir du cadre de l'invention.

## Revendications

1. Procédé de nettoyage de pièces de vaisselle dans une machine à laver la vaisselle (1), ladite machine à laver la vaisselle (1) comprenant :
- une cuve de lavage (2), où ladite cuve de lavage (2) comprend une gamelle (6) ménagée au niveau de la paroi inférieure (2d) de ladite cuve de lavage (2), ladite gamelle (6) pouvant contenir de l'eau d'un bain de lavage et/ou de rinçage,
- au moins un panier à vaisselle (8) pouvant contenir des pièces de vaisselle et disposé à l'intérieur de ladite cuve de lavage (2),
- au moins un moyen de chauffage (9) pour chauffer l'eau d'un bain de lavage et/ou de rinçage,
- au moins un moyen d'aspersion (10) de l'eau d'un bain de lavage et/ou de rinçage dans ladite cuve de lavage (2), où un premier moyen d'aspersion (10a) est disposé en dessous dudit au moins un panier à vaisselle (8),
- au moins une pompe de mise en circulation (11) de l'eau d'un bain de lavage et/ou de rinçage depuis ladite gamelle (6) vers ledit au moins un moyen d'aspersion (10),
ledit procédé comprenant au moins les étapes suivantes :
- une étape de lavage, où l'eau d'un bain de lavage est remplie, chauffée, puis mise en circulation au moyen de ladite au moins une pompe de mise en circulation (11) depuis ladite gamelle (6) vers ledit au moins un moyen d'aspersion (10) puis retournée dans ladite gamelle (6) ;
- une étape de vidange de l'eau du bain de lavage ;
- une première étape de rinçage, où l'eau d'un premier bain de rinçage est remplie, puis mise en circulation au moyen de ladite au moins une pompe de mise en circulation (11), sans chauffage de l'eau dudit premier bain de rinçage ;
- une étape de vidange de l'eau dudit premier bain de rinçage ; et
- une deuxième étape de rinçage, où l'eau d'un deuxième bain de rinçage est remplie, puis mise en circulation au moyen de ladite au moins une pompe de mise en circulation (11), avec chauffage de l'eau dudit deuxième bain de rinçage ;
**caractérisé en ce qu'**au cours de ladite première étape de rinçage, la mise en fonctionnement de ladite au moins une pompe de mise en circulation (11) met en circulation de l'eau dudit premier bain de rinçage depuis ladite gamelle (6) vers ledit premier moyen d'aspersion (10a) sans arroser les pièces de vaisselle disposées dans ladite cuve de lavage (2) de sorte à nettoyer ladite gamelle (6) de ladite cuve de lavage (2) ainsi que la partie d'un circuit hydraulique (13) de ladite machine à laver la vaisselle (1) située en dessous dudit premier moyen d'aspersion (10a).

2. Procédé de nettoyage de pièces de vaisselle dans une machine à laver la vaisselle (1) selon la revendication 1, **caractérisé en ce que** la pression d'eau générée lors de la mise en fonctionnement de ladite au moins une pompe de mise en circulation (11), au cours de ladite première étape de rinçage, est inférieure à la pression d'eau d'arrosage des pièces de vaisselle par ledit premier moyen d'aspersion (10a).

3. Procédé de nettoyage de pièces de vaisselle dans une machine à laver la vaisselle (1) selon la revendication 2, **caractérisé en ce que** ledit premier moyen d'aspersion (10a) est un bras d'aspersion rotatif, et **en ce que** ladite pression d'eau générée lors de la mise en fonctionnement de ladite au moins une pompe de mise en circulation (11), au cours de ladite première étape de rinçage, est inférieure à la pression d'eau d'entraînement en rotation dudit bras d'aspersion rotatif.

4. Procédé de nettoyage de pièces de vaisselle dans une machine à laver la vaisselle (1) selon la revendication 2 ou 3, **caractérisé en ce que** ladite pression d'eau générée lors de la mise en fonctionnement de ladite au moins une pompe de mise en circulation (11), au cours de ladite première étape de rinçage, s'étend dans une plage de 5 à 10 mbar.

5. Procédé de nettoyage de pièces de vaisselle dans une machine à laver la vaisselle (1) selon l'une quelconque des revendications 1 à 4, **caractérisé en ce que** la quantité d'eau contenue dans ladite gamelle (6), au cours de ladite première étape de rinçage, est une quantité d'eau prédéterminée permettant uniquement de pouvoir amorcer ladite au moins une pompe de mise en circulation (11).

6. Procédé de nettoyage de pièces de vaisselle dans une machine à laver la vaisselle (1) selon la revendication 5, **caractérisé en ce que** ladite quantité d'eau prédéterminée contenue dans ladite gamelle (6), au cours de ladite première étape de rinçage, est de l'ordre de 1 litre.

7. Procédé de nettoyage de pièces de vaisselle dans une machine à laver la vaisselle (1) selon l'une quelconque des revendications 1 à 6, **caractérisé en ce qu'**au cours de ladite première étape de rinçage, ladite au moins une pompe de mise en circulation (11) est mise en fonctionnement par au moins une impulsion électrique d'une durée prédéterminée.

8. Procédé de nettoyage de pièces de vaisselle dans une machine à laver la vaisselle (1) selon la revendication 7, **caractérisé en ce que** ladite durée prédéterminée de ladite impulsion électrique de mise en fonctionnement de ladite au moins une pompe de mise en circulation (11) est inférieure à 10 secondes, et préférentiellement de l'ordre de 5 secondes.

9. Procédé de nettoyage de pièces de vaisselle dans une machine à laver la vaisselle (1) selon la revendication 7 ou 8, **caractérisé en ce que** ladite première étape de rinçage comprend une unique impulsion électrique de ladite au moins une pompe de mise en circulation (11) d'une durée prédéterminée.

10. Machine à laver la vaisselle (1), **caractérisée en ce qu'**elle comprend une unité de commande (12) adaptée à mettre en oeuvre le procédé de nettoyage de pièces de vaisselle conforme à l'une quelconque des revendications 1 à 9.

## Patentansprüche

1. Verfahren zur Reinigung von Geschirrteilen in einer Geschirrspülmaschine (1), wobei die besagte Geschirrspülmaschine (1) umfasst:
- Einen Spülbehälter (2), wobei der besagte Spülbehälter (2) eine im Bereich der unteren Wand (2d) des besagten Spülbehälters (2) angeordnete Schale (6) umfasst, wobei die besagte Schale (6) Wasser einer Wasch- und/oder Klarspülflotte enthalten kann,
- mindestens einen Geschirrkorb (8), welcher Geschirrteile enthalten kann und im Inneren des besagten Spülbehälters (2) angeordnet ist,
- mindestens ein Heizmittel (9) zur Erhitzung des Wassers einer Wasch- und/oder Klarspülflotte,
- mindestens ein Besprengungsmittel (10) des Wassers einer Wasch- und/oder Klarspülflotte in dem besagten Spülbehälter (2), in welchem ein erstes Besprengungsmittel (10a) unterhalb des besagten mindestens einen Geschirrkorbs (8) angeordnet ist,
- mindestens eine Umwälzpumpe (11) zum Umwälzen des Wassers einer Wasch- und/oder Klarspülflotte von der besagten Schale (6) in das besagte mindestens ein Besprengungsmittel (10),
wobei das besagte Verfahren mindestens die folgenden Schritte umfasst:
- einen Schritt des Waschens, in welchem das Wasser einer Waschflotte eingefüllt, erhitzt und anschließend anhand der besagten mindestens einen Umwälzpumpe (11) von der besagten Schale (6) zu dem besagten mindestens einen Besprengungsmittel (10) in Umlauf gebracht und anschließend in die besagte Schale (6) zurückgeführt wird;
- einen Schritt des Ablassens des Wassers der Waschflotte;
- einen ersten Schritt des Klarspülens, wobei das Wasser einer ersten Klarspülflotte eingefüllt und anschließend anhand der besagten mindestens einen Umwälzpumpe (11) in Umlauf gebracht wird, ohne Erhitzen des Wassers der besagten ersten Klarspülflotte;
- einen Schritt des Ablassens des Wassers der besagten ersten Klarspülflotte; und
- einen zweiten Schritt des Klarspülens, wobei das Wasser einer zweiten Klarspülflotte eingefüllt und anschließend anhand der besagten mindestens einen Umwälzpumpe (11) in Umlauf gebracht wird, mit Erhitzen des Wassers der besagten zweiten Klarspülflotte;
**dadurch gekennzeichnet, dass** während des besagten ersten Klarspülschrittes die Inbetriebsetzung der besagten mindestens einen Umwälzpumpe (11) das Wasser der besagten ersten Klarspülflotte von der besagten Schale (6) zu dem besagten ersten Besprengungsmittel (10a) in Umlauf bringt, ohne die in dem besagten Spülbehälter (2) angeordneten Geschirrteil zu besprengen, um die besagte Schale (6) des besagten Spülbehälters (2) sowie des unterhalb des besagten ersten Besprechungsmittel (10a) angeordneten Teils eines Hydraulikschaltkreises (13) der besagten Geschirrspülmaschine (1) zu reinigen.

2. Verfahren zur Reinigung von Geschirrteilen in einer Geschirrspülmaschine (1) nach Anspruch 1, **dadurch gekennzeichnet, dass** der während der Inbetriebsetzung der besagten mindestens einen Umwälzpumpe (11) während des besagten ersten Klarspülschrittes erzeugte Wasserdruck niedriger ist als der Wasserdruck zur Besprengung der Geschirrteile durch das besagte erste Besprengungsmittel (10a).

3. Verfahren zur Reinigung von Geschirrteilen in einer Geschirrspülmaschine (1) nach Anspruch 2, **dadurch gekennzeichnet, dass** das besagte erste Besprengungsmittel (10a) ein drehbarer Sprüharm ist, und dass der besagte während der Inbetriebsetzung der besagten mindestens einen Umwälzpumpe (11) während des besagten ersten Klarspülschrittes erzeugte Wasserdruck niedriger ist als der Wasserdruck zum Drehantrieb des besagten drehbaren Sprüharms ist.

4. Verfahren zur Reinigung von Geschirrteilen in einer Geschirrspülmaschine (1) nach Anspruch 2 oder 3, **dadurch gekennzeichnet, dass** sich der besagte während der Inbetriebsetzung der besagten mindestens einen Umwälzpumpe (11) während des besagten ersten Klarspülschrittes erzeugte Wasserdruck in einem Bereich von 5 bis 10 mbar bewegt.

5. Verfahren zur Reinigung von Geschirrteilen in einer Geschirrspülmaschine (1) nach einem beliebigen der Ansprüche 1 bis 4, **dadurch gekennzeichnet, dass** die während des besagten ersten Klarspülschrittes in der besagten Schale (6) enthaltene Wassermenge eine vorbestimmte Wassermenge ist, die es lediglich ermöglicht, die besagte mindestens eine Umwälzpumpe (11) in Gang setzen zu können.

6. Verfahren zur Reinigung von Geschirrteilen in einer Geschirrspülmaschine (1) nach Anspruch 5, **dadurch gekennzeichnet, dass** die besagte in der besagten Schale (6) enthaltene vorbestimmte Wassermenge während des besagten ersten Klarspülschrittes etwa 1 Liter beträgt.

7. Verfahren zur Reinigung von Geschirrteilen in einer Geschirrspülmaschine (1) nach einem beliebigen der Ansprüche 1 bis 6, **dadurch gekennzeichnet, dass** die besagte mindestens einen Umwälzpumpe (11) während des besagten ersten Klarspülschrittes durch mindestens einen elektrischen Impuls einer vorbestimmten Dauer in Betrieb gesetzt wird.

8. Verfahren zur Reinigung von Geschirrteilen in einer Geschirrspülmaschine (1) nach Anspruch 7, **dadurch gekennzeichnet, dass** die besagte vorbestimmte Dauer des besagten elektrischen Impulses zur Inbetriebsetzung der besagten mindestens einen Umwälzpumpe (11) kürzer als 10 Sekunden ist und vorzugsweise etwa 5 Sekunden beträgt.

9. Verfahren zur Reinigung von Geschirrteilen in einer Geschirrspülmaschine (1) nach Anspruch 7 oder 8, **dadurch gekennzeichnet, dass** der besagte erste Klarspülschritt einen einzigen elektrischen Impuls der besagten mindestens einen Umwälzpumpe (11) einer vorbestimmten Dauer umfasst.

10. Geschirrspülmaschine (1), **dadurch gekennzeichnet, dass** sie eine Steuereinheit (12) umfasst, welche für die Durchführung des Verfahrens zur Reinigung von Geschirrteilen gemäß einem beliebigen der Ansprüche 1 bis 9 ausgelegt ist.

## Claims

1. A method for cleaning dishware in a dishwasher (1), said dishwasher (1) comprising:
- a wash tub (2), wherein said wash tub (2) comprises a bowl (6) built into the lower wall (2d) of said wash tub (2), said bowl (6) being able to contain the water of a washing and/or rinsing bath,
- at least one dish rack (8) being able to contain dishware and disposed inside said wash tub (2),
- at least one means of heating (9) for heating the water of a washing and/or rinsing bath,
- at least one means of sprinkling (10) for drawing the water of a washing and/or rinsing bath into said wash tub (2), wherein a first means of sprinkling (10a) is disposed beneath said at least one dish rack (8),
- at least one pump (11) for circulating the water of a washing and/or rinsing bath from said bowl (6) to said at least one means of sprinkling (10),
said method comprising at least the following steps:
- a step of washing, wherein the water of a washing bath is filled, heated, and then circulated by means of said at least one circulating pump (11) from said bowl (6) to said at least one means of sprinkling (10), and then returned to said bowl (6);
- a step of draining the water from the washing bath;
- a first step of rinsing, in which the water of a first rinsing bath is filled, then circulated by means of said at least one circulating pump (11), without heating the water of said first rinsing bath;
- a step of draining the water from the rinsing bath; and
- a second step of rinsing, in which the water of a second rinsing bath is filled, then circulated by means of said at least one circulating pump (11), with heating the water of said second rinsing bath;
**characterized in that** during said first step of rinsing, the activation of said at least one circulating pump (11) circulates the water of said first rinsing bath from said bowl (6) to said first means of sprinkling (10a) without sprinkling the dishware disposed within said washtub (2) so as to clean said bowl (6) of said washtub (2) as well as a portion of a hydraulic circuit (13) of said dishwasher (1) located beneath said first means of sprinkling (10a).

2. A method for cleaning dishware in a dishwasher (1) according to claim 1, **characterized in that** the water pressure generated when said at least one circulating pump (11) is activated, during said first step of rinsing, is less than the water pressure for sprinkling the dishware by said means of sprinkling (10a).

3. A method for cleaning dishware in a dishwasher (1) according to claim 2, **characterized in that** said first means of sprinkling (10a) is a rotating sprinkling arm, and **in that** said water pressure generated when said at least one circulating pump (11) is activated, during said first step of rinsing, is less than the water pressure for rotating said rotating sprinkling arm.

4. A method for cleaning dishware in a dishwasher (1) according to claim 2 or 3, **characterized in that** said water pressure generated when said at least one circulating pump (11) is activated, during said first step of rinsing, is within a range of 5 to 10 mbar.

5. A method for cleaning dishware in a dishwasher (1) according to any one of the claims 1 to 4, **characterized in that** the quantity of water contained in said bowl (6), during said first step of rinsing, is a predetermined quantity of water suitable only for priming said at least one circulating pump (11).

6. A method for cleaning dishware in a dishwasher (1) according to claim 5, **characterized in that** said predetermined quantity of water contained within said bowl (6), during said first step of rinsing, is in the order of 1 litre.

7. A method for cleaning dishware in a dishwasher (1) according to any one of the claims 1 to 6, **characterized in that** during said first step of rinsing, said at least one circulating pump (11) is activated by at least one electrical pulse of a predetermined duration.

8. A method for cleaning dishware in a dishwasher (1) according to claim 7, **characterized in that** said predetermined duration of said electrical pulse for activating said at least one circulating pump (11) is less than 10 seconds, and preferentially in the order of 5 seconds.

9. A method for cleaning dishware in a dishwasher (1) according to claim 7 or 8, **characterized in that** said first step of rinsing comprises a single electrical pulse of said at least one circulating pump (11) of a predetermined duration.

10. A dishwasher (1), **characterized in that** it comprises a control unit (12) adapted to implement the method for cleaning dishware according to any one of the claims 1 to 9.
